# EUROPEAN PATENT SPECIFICATION

(11) **EP 2 838 675 B1**
(45) Date of publication and mention of the grant of the patent: **30.11.2016**
(21) Application number: 13778360.1
(22) Date of filing: 17.04.2013
(51) Int. Cl.: B09B 3/00, B01D 21/02, E03F 5/14, E03F 5/16, E04F 17/10, B65F 1/00, B01D 21/00

(54) **SYSTEM FOR THE TREATMENT OF FOOD WASTE IN CONNECTION TO DISH WASHING INSTALLATIONS**
SYSTEM ZUR BEHANDLUNG VON SPEISERESTEN IN VERBINDUNG MIT GESCHIRRSPÜLANLAGEN
SYSTÈME POUR LE TRAITEMENT DE DÉCHETS ALIMENTAIRES DANS DES INSTALLATIONS DE LAVAGE DE VAISSELLE

(30) Priority: 17.04.2012 SE 1250383
(43) Date of publication of application: 25.02.2015
(73) Proprietor: Rensa Entreprenad Sverige AB, 185 21 Vaxholm (SE)
(72) Inventor: JANSSON, Mikael, S-185 94 Vaxholm (SE)
(74) Representative: Noréns Patentbyrå AB
(86) International application number: PCT/SE2013/050420
(87) International publication number: WO 2013/158025

(56) References cited:
- KR-Y1- 200 445 578
- US-A- 2 216 300
- US-A- 5 762 810
- US-A- 5 827 425
- US-A1- 2004 222 149
- US-A1- 2011 079 669
- US-A1- 2011 079 669
- "Guide to Grease Interceptors", INTERNET CITATION, 1 January 1998 (1998-01-01), pages 1-14, XP008134047, Retrieved from the Internet: URL:http://www.pdionline.org/grease.pdf [retrieved on 2011-03-07]
- N.N.: "Settler Series 275 Gallon Liquid Storage Capacity Polyethylene Catch Basin", , 11 September 2011 (2011-09-11), pages 1-1, XP055232705, Retrieved from the Internet: URL:http://www.schierproducts.com/SI/cb/sp ec/cb_275_s_spec.pdf [retrieved on 2015-12-01]

## Description

The present invention concerns a system for an efficient treatment of the food waste that is treated in dish washing installations, in particular in restaurants and industrial kitchens.

According to one of the national environmental objectives in Sweden, at least 35% of food waste from households and foodstuffs premises is to be recycled through biological processing. Currently, most collection of food waste takes place from restaurants in vessels or sacks that are subsequently transported to pretreatment facilities, and onwards to biogas production. In cases in which the restaurants are not participants in the collection system, the mixed waste is sent to combustion. As a supplement to the collection of food waste, permission was granted in 2008 for individual households to install food waste mills connected directly to the waste water system in Stockholm, which is a simple way to treat food waste and that does not require vehicular transport. There is a demand from industrial kitchens and restaurants to use food waste mills, not only to avoid the heavy lifting of sacks that are to be carried or transported to waste-storage rooms (which in turn must be kept clean in order to avoid offensive smells), but also to be able to use an efficient and environmentally sensitive method of treating food waste. Municipal waste-treatment plants are major producers of biogas used as fuel for vehicles and an addition of organic material from this type of food waste would be able to contribute to increasing the production of biogas.

It is, as has been mentioned above, permitted in Stockholm, among other locations, to connect a food waste mill to the municipal waste-water network, but in the case of the treatment of food waste from restaurants and industrial kitchens, it is believed that the volumes would be so concentrated that the existing waste-water networks would not be able to cope with such an increased mixing in of food waste. This would lead to far too high levels of suspended food waste and fat in the waste water in order for the existing waste water networks and waste-treatment plants to be able to cope with this. It has, therefore, been suggested that it should be possible for the waste to be collected in closed tanks, such that it can be transported with slurry tankers. The problem, however, is that it is a case of such large volumes of water with mixed-in food waste that it would not be economically defensible with removal in this manner.

US 2011/0079669 A1 discloses a system for the treatment of food waste according to the preamble of claim 1.

The purpose of the present invention, therefore, is to achieve a new system for the treatment of food waste in connection with dish washing installations in restaurants, industrial kitchens and the foodstuffs industry.

The above purpose is solved according to the invention through there being mounted in a dish-washing sink in a restaurant or industrial kitchen a food waste mill, arranged to mill down food waste together with water, and through there being connected from the food waste mill a pipeline for the waste water from the food waste mill to the inlet of a slurry tank arranged for the separate of slurry (milled food waste) from the waste water, whereby the slurry tank is provided with an inlet for the uncleaned waste water at an upper part of the tank and with the inlet designed such that the waste water is directed outwards, principally horizontally, towards the sides of the inner surface of the tank, and through there being connected from the slurry tank a pipeline to a fat-separation tank for the separation of remaining fat in the waste water from the slurry tank, and through there being connected from the fat separator a pipeline for the removal of remaining waste water to a waste-water network.

Most restaurants today are already compelled to have facilities to deal with and separate fat from their dish washing installations, and thus what is then required as a supplement is a food waste mill and a separate first tank for the separation from the waste water of the slurry that has been formed from the milled food waste mixed with dish-washing water. The new slurry tank can then be connected to the existing fat separator, which is also a tank.

The slurry tank and the fat-separation tank are provided with emptying holes or pipe connectors, such that they can be emptied by, for example, a slurry tanker.

According to one preferred embodiment, the outlet from the slurry tank is arranged in an opposing side of the tank relative to the inlet, and with also its outlet located at an upper edge of the tank, but passing through an outlet pipe that has its entrance in the vicinity of the bottom of the tank. It is preferable that also the outlet pipe is designed with two opposing inlets that face away from each other, directed principally perpendicularly to the wall in which the outlet pipe is located. It is in this way ensured that principally laminar flow from the inlet to the outlet cannot arise, which would make the separation of the slurry from the waste water considerably more difficult.

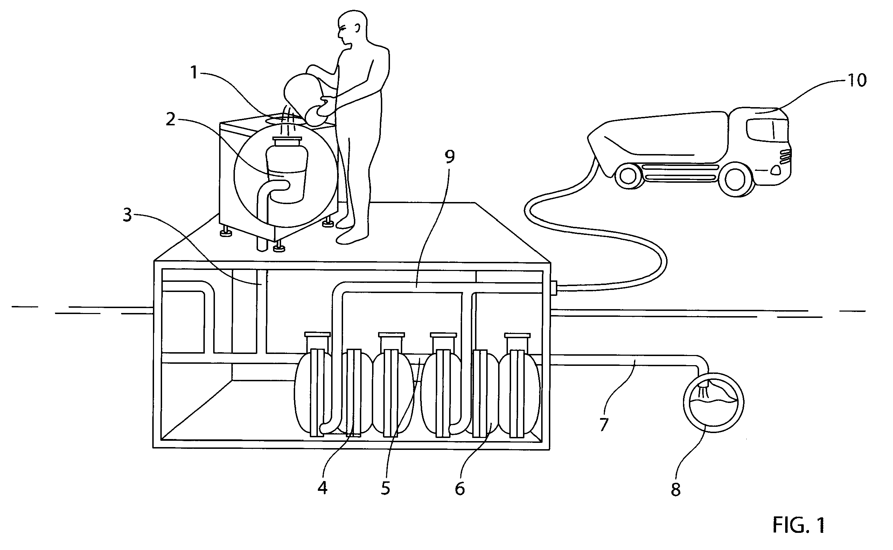

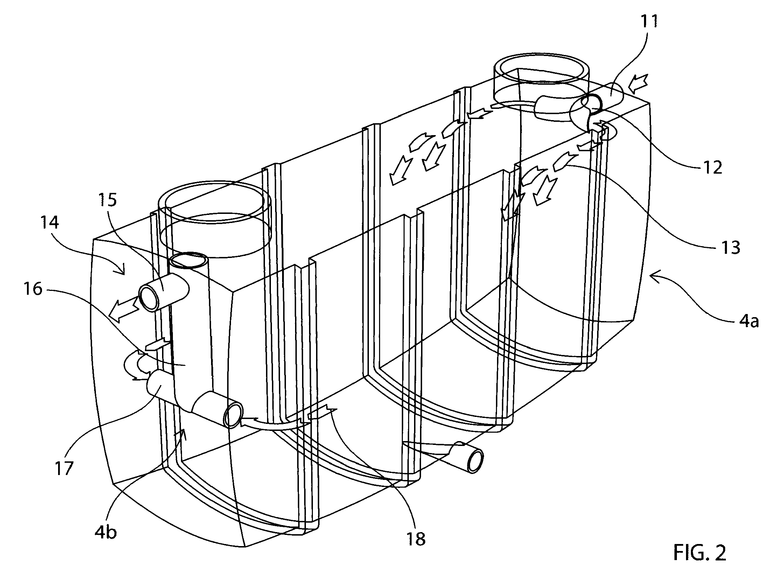

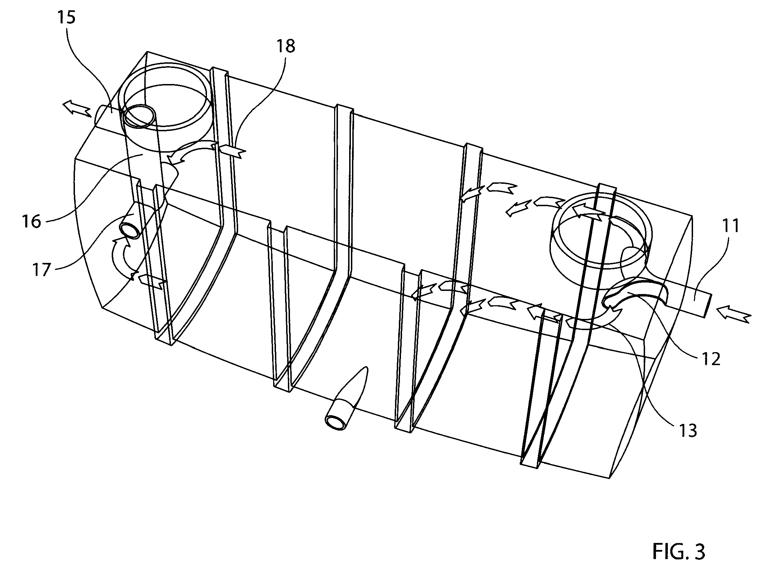

The invention will now be described in more detail in the form of a non-limiting embodiment, illustrated with the aid of the attached schematic drawings, where **Figure 1** shows a schematic arrangement of a system according to the invention, **Figure 2** shows a schematic perspective view, partially cut away, of a slurry tank according to the invention, and **Figure 3** is a view that corresponds to Figure 2, but in a second perspective.

Figure 1 shows schematically a system according to the invention where there is arranged at a dish-washing sink 1 a food waste mill 2, the outlet of which is connected through a waste line 3 to one side of a slurry tank 4 according to the invention. A pipeline 5 passes from the second side of the slurry tank 4 and leads waste water from the slurry tank onwards to one side of a fat separator 6, which also is, in this case, a tank 6. An outlet line 7 passes from the second side of the fat-separation tank 6 in order to lead away the waste water that has been separated from fat in the fat separator 6 onwards to a waste line 8, for example in a municipal waste-water network.

As is made clear by Figure 1, also the two tanks 4 and 6 are connected to a common pipeline 9, an emptying line, to which a slurry tanker 10 can be connected for the emptying of the two tanks 4 and 6. It is the appropriate that valves, not shown in the drawings, be arranged at each tank such that one tank at a time can be emptied.

It is obvious that there may be arranged separate pipelines from the slurry tank 4 and the fat-separation tank 6 in order to make it possible to empty these individually, and possibly also at different intervals.

It is also possible that several dish-washing sinks 1, each with its food waste mill 2, may be connected to a common slurry tank 4 for the separation of the slurry from the waste water. It may also be arranged such that several slurry tanks 4 are arranged for the separation of the slurry, while being connected to a common fat-separation tank 6.

It is appropriate that the slurry tank 4 and the fat-separation tank 6 be placed at a lower level than the dish-washing sink 1 such that the waste water can flow under its own weight from the dish-washing sink to the slurry tank 4 and onwards to the fat-separation tank 6. It is preferable that the tanks 4, 6 are placed on a lower storey in the building in which the dish washing installation is located.

Figures 2 and 3 shows a schematically a slurry tank 4 according to the invention, and where the sides of the tank have been made transparent in order to be able to make visible schematically the input flow of waste water that contains slurry, food waste, through an inlet line 11, located at one gable end 4a of the tank. As is suggested in the drawing, the inlet line 11 is located in the upper part of the tank, and is arranged such that the waste water flows in principally horizontally directly into the tank. It is appropriate, however, that the inlet line 11 be provided with guides 12 that direct the inflowing waste water outwards towards the sides of the tank 4, as is suggested by the arrows 13. These arrows 13 suggest also that the inflowing waste water will start to sink downwards once it has penetrated a certain distance into the tank.

There is arranged at the opposing gable end 4b of the slurry tank 4 an outlet pipe 14, which has its horizontal part 15 as it leaves the tank located at the upper part of the tank. This outgoing horizontal part 15 is connected to the pipeline 5 that leads the waste water onwards from the slurry tank 4 to the fat-separation tank 6. The outlet pipe 14, however, comprises also inside of the tank a vertically extending section 16 of pipe that extends downwards from the outgoing horizontal part 15 a certain distance towards the bottom of the tank, in order there to transition into an inlet part 17, formed as a T-pipe with openings in the inlet part 17 that face away from each other and towards the sides of the tank 4. The inlet part 17 thus extends parallel to the gable end 4b of the tank, and ensures that water that is to flow out through the outlet pipe 14 and onwards to the fat-separation tank 6 is the waste water that is present at the approximate centre of the tank 4 and that flow inwards towards the centre of the tank 4 on this level, as is suggested by the arrows 18. The inlet part 17 is thus located at the approximate centre of the height of the tank, which ensures that heavier particles in the sludge that are heavier than the water in itself can collect at the bottom of the tank 4, while such parts of the sludge that are lighter than water collect above the level in the tank at which the water flows out from the tank.

Thus, in this way a fractionation of the food waste in the tank is achieved, such that the heavier waste collects at the bottom of the tank while such waste as is lighter that water floats on the water in the upper part of the tank, and the water is present in the central region of the tank, from the point of view of height. With the outlet that leads the water onwards to a fat separator located in the centre of the tank, from the point of view of height, the water can thus easily be separated and led onwards to a fat separator, and then onwards to a waste-water network.

With a system according to the invention, it has become possible to separate food waste from the waste water such that the waste water that eventually leaves the fat-separation tank 6 lies under the limiting values that have been set for the amount of suspended material that may be released into the municipal waste-water network. In the same way, samples have shown that also the waste water that leaves the fat-separation tank has contents of fat that lie under the limiting values that have been set.

## Claims

1. A system for the treatment of food waste in dish washing installations in restaurants, industrial kitchens, wherein there is mounted in a dish-washing sink (1) in a restaurant or industrial kitchen a food waste mill (2), arranged to mill down food waste together with water, wherein there is connected a pipeline (3) from the food waste mill for waste water from the food waste mill (2) to the inlet of a slurry tank (4) arranged for the separation of sludge from the waste water, whereby the slurry tank (4) is provided with an inlet (11) for the uncleaned waste water at an upper part of the tank (4), and wherein there is connected from the slurry tank a pipeline (5) to a fat-separation tank (6) for the separation of remaining fat in the waste water from the slurry tank (4), and wherein there is connected from the fat separator (6) a pipeline (7) for the removal of remaining waste water to a waste-water network (8), **characterized in that** the inlet (11) is so designed that the waste water is directed outwards, principally horizontally, towards inner surfaces of the sides of the tank (4).

2. The system according to claim 1, **characteri- sed** in that the outlet (14-17) from the slurry tank (4) is arranged in an opposing side (4b) of the tank relative to the inlet (11), and with also the outlet (15) located at an upper edge of the tank (4), but passing through an outlet pipe (16) that has its entrance (17) closer to the bottom of the tank.

3. The system according to claim 2, **characteri- sed** in that the entrance (17) to the outlet pipe (16) is arranged principally in the centre of the height of the tank (4).

4. The system according to claim 3, **characteri- sed** in that the outlet pipe (14) is designed with two opposing entrances (17) that face away from each other, directed principally perpendicularly to the wall (4b) in which the outlet pipe (14) is located.

5. The system according to any one of the preceding claims, **characterised in that** several dish-washing sinks (1) are connected to a common slurry tank (4).

6. The system according to any one of claims 1-4, **characterised in that** several dish-washing sinks (1) are connected each to a slurry tank (4), and **in that** several slurry tanks (4) are connected to a common fat separator (6).

7. The system according to any one of the preceding claims, **characterised in that** the slurry tank (4) and the fat-separation tank (6) are arranged in the close vicinity of each other.

8. The system according to any one of the preceding claims, **characterised in that** the slurry tank (4) and the fat-separation tank (6) are provided with pipelines (9) for connection to a slurry tanker (10).

## Patentansprüche

1. System zur Behandlung von Nahrungsmittelabfällen in Geschirrspülanlagen in Restaurants und Großküchen, wobei in einem Spülbecken (1) in einem Restaurant oder einer Großküche ein Lebensmittelabfall-Zerkleinerer (2) montiert ist, der ausgebildet ist, Lebensmittelabfälle zusammen mit Wasser zu zerkleinern, wobei eine vom Lebensmittelabfall-Zerkleinerer kommende Rohrleitung (3) für Abwasser vom Lebensmittelabfall-Zerkleinerer (2) an den Einlass eines Schlickerbehälters (4) angeschlossen ist, der für eine Trennung des Schlicks vom Abwasser ausgebildet ist, wobei der Schlickerbehälter (4) mit einem Einlass (11) für das ungereinigte Abwasser an einem oberen Teil des Behälters (4) versehen ist, wobei an den Schlickerbehälter eine Rohrleitung (5) zu einem Fettabscheidebehälter (6) angeschlossen ist, der zur Abscheidung von noch in dem Abwasser vom Schlickerbehälter (4) vorhandenem Fett dient, und wobei an den Fettabscheider (6) eine Rohrleitung (7) für ein Abführen von verbleibendem Abwasser zu einem Abwassernetz (8) angeschlossen ist, **dadurch gekennzeichnet, dass** der Einlass (11) so ausgelegt ist, dass das Abwasser nach außen, im Wesentlichen in horizontaler Richtung, auf Innenflächen der Seiten des Behälters (4) gelenkt wird.

2. System nach Anspruch 1, **dadurch gekennzeichnet, dass** der Auslass (14-17) des Schlickerbehälters (4) auf einer bezüglich des Einlasses (11) gegenüberliegenden Seite (4b) angeordnet ist, und wobei ebenfalls sich der Auslass (15) an einer oberen Kante des Behälters (4) befindet, jedoch ein Durchfließen eines Auslassrohrs (16) erfolgt, dessen Eintritt (17) näher am Boden des Behälters liegt.

3. System nach Anspruch 2, **dadurch gekennzeichnet, dass** der Eintritt (17 des Auslassrohrs (16) im Wesentlichen in der Mitte bezüglich der Höhe des Behälters (4) angeordnet ist.

4. System nach Anspruch 3, **dadurch gekennzeichnet, dass** das Auslassrohr (14) mit zwei gegenüberliegenden Eintritten (17) ausgebildet ist, die voneinander weg weisen und die im Wesentlichen senkrecht zu der Wand (4b) ausgerichtet sind, in der sich das Auslassrohr (14) befindet.

5. System nach einem der vorhergehenden Ansprüche, **dadurch gekennzeichnet, dass** mehrere Geschirrspülbecken (1) an einen gemeinsamen Schlickerbehälter (4) angeschlossen sind.

6. System nach einem der Ansprüche 1 bis 4, **dadurch gekennzeichnet, dass** mehrere Geschirrspülbecken (1) jeweils an einen Schlickerbehälter (4) angeschlossen sind, und dass mehrere Schlickerbehälter (4) an einen gemeinsamen Fettabscheider (6) angeschlossen sind.

7. System nach einem der vorhergehenden Ansprüche, **dadurch gekennzeichnet, dass** der Schlickerbehälter (4) und der Fettabscheidebehälter (6) in unmittelbarer Nähe zueinander angeordnet sind.

8. System nach einem der vorhergehenden Ansprüche, **dadurch gekennzeichnet, dass** der Schlickerbehälter (4) und der Fettabscheidebehälter (6) mit Rohrleitungen (9) zum Anschluss an ein Schlickertankfahrzeug (10) versehen sind.

## Revendications

1. Système pour le traitement de déchets alimentaires dans des installations de lavage de vaisselle dans des restaurants, des cuisines industrielles, dans lequel un broyeur de déchets alimentaires (2) est monté dans une cuve de lavage de vaisselle (1) dans un restaurant ou une cuisine industrielle, agencé pour broyer des déchets alimentaires avec de l'eau, dans lequel un tuyau (3) est relié du broyeur de déchets alimentaires pour l'eau usée provenant du broyeur de déchets alimentaires (2) à l'orifice d'admission d'un réservoir de boue (4) agencé pour séparer la boue de l'eau usée, moyennant quoi le réservoir de boue (4) est équipé d'un orifice d'admission (11) pour l'eau usée non nettoyée à une partie supérieure du réservoir (4), et dans lequel un tuyau (5) est relié du réservoir de boue à un réservoir de séparation de graisse (6) pour séparer la graisse restante dans l'eau usée du réservoir de boue (4) et dans lequel un tuyau (7) est relié du séparateur de graisse (6) en vue de l'évacuation des eaux usées restantes vers un réseau des eaux usées (8), **caractérisé en ce que** l'orifice d'admission (11) est conçu de sorte que les eaux usées soient dirigées vers l'extérieur, principalement de manière horizontale, vers des surfaces intérieures des parois latérales du réservoir (4).

2. Système selon la revendication 1, **caractérisé en ce que** l'orifice d'évacuation (14-17) du réservoir de boue (4) est agencé dans une paroi opposée (4b) du réservoir par rapport à l'orifice d'admission (11) et avec l'orifice d'évacuation (15) situé à un bord supérieur du réservoir (4) mais passant à travers un tuyau d'évacuation (16) dont l'entrée (17) est plus à proximité du fond du réservoir.

3. Système selon la revendication 2, **caractérisé en ce que** l'entrée (17) au tuyau d'évacuation (16) est agencée principalement au centre de la hauteur du réservoir (4).

4. Système selon la revendication 3, **caractérisé en ce que** le tuyau d'évacuation (14) est conçu avec deux entrées opposées (17) qui se présentent de face en éloignement l'une de l'autre, dirigées principalement de manière perpendiculaire à la paroi (4b) dans laquelle est située le tuyau d'évacuation (14).

5. Système selon l'une quelconque des revendications précédentes, **caractérisé en ce que** plusieurs cuves de lavage de vaisselle (1) sont reliées à un réservoir de boue commun (4).

6. Système selon l'une quelconque des revendications 1 à 4, **caractérisé en ce que** plusieurs cuves de lavage de vaisselle (1) sont reliées chacune à un réservoir de boue (4) et **en ce que** plusieurs réservoirs de boue (4) sont reliés à un séparateur de graisse commun (6).

7. Système selon l'une quelconque des revendications précédentes, **caractérisé en ce que** le réservoir de boue (4) et le réservoir de séparation de graisse (6) sont agencés à proximité étroite l'un de l'autre.

8. Système selon l'une quelconque des revendications précédentes, **caractérisé en ce que** le réservoir de boue (4) et le réservoir de séparation de graisse (6) sont équipés de tuyaux (9) en vue d'une connexion à une citerne de boue (10).
